# EUROPEAN PATENT APPLICATION

(11) **EP 4 657 533 A1**
(43) Date of publication of application: **03.12.2025**
(21) Application number: 24216982.9
(22) Date of filing: 03.12.2024
(51) Int. Cl.: H01M 4/04, H01M 50/20

(54) **BATTERY PACK FRAME AND BATTERY PACK**

(30) Priority: 30.05.2024 CN 202421228979 U; 23.08.2024 WO PCT/CN2024/114169
(71) Applicant: Eve Energy Co., Ltd., Huizhou, Guangdong 516006 (CN)
(72) Inventor: HUANG, Liliang, Huizhou, Guangdong 516006 (CN); CHEN, Zhiwei, Huizhou, Guangdong 516006 (CN)
(74) Representative: Berggren Oy

(57) **Abstract**

A battery pack frame and a battery pack are provided by the present disclosure. The battery pack includes a front frame (11), a first connecting frame (12), a rear frame (13), and a second connecting frame (14) connected in sequence from end to tail. Each of the front frame (11) and the rear frame (13) is an integrated stamping molding structure. Each of the first connecting frame (12) and the second connecting frame (14) is an integrated roll molding structure.

## Description

### TECHNICAL FIELD

The present disclosure relates to a field of battery pack frame technologies, and in particular, to a battery pack frame and a battery pack.

### BACKGROUND

At present, frames of mainstream battery case bodies generally adopt an aluminum extrusion welding process. Although the box bodies using an aluminum profile scheme have high maturity, flexible and versatile profile shape designs, and light overall weight, the aluminum extrusion process is a high-energy consumption process, resulting in a high processing cost. In addition, aluminum is a non-ferrous metal, resulting in a high material cost.

In view of the above-mentioned production shortcomings of aluminum profile case bodies, many enterprises have begun to design rolled steel case bodies. Due to a low cost of a material itself, mature welding process, and relatively little machining, cost of the rolled steel case bodies may be about 30% lower than the aluminum profile case bodies. However, it is inconvenient to transport all-steel case bodies due to heavyweight. In addition, development cost of rolling molds is high, thereby increasing production cost.

Therefore, it is urgent to design a battery pack frame and a battery pack.

### SUMMARY

In a first aspect, a battery pack frame is provided by the present disclosure. The battery pack frame includes a front frame, a first connecting frame, a rear frame, and a second connecting frame connected in sequence from end to tail. Each of the front frame and the rear frame is an integrated stamping molding structure. Each of the first connecting frame and the second connecting frame is an integrated roll molding structure.

In a second aspect, a battery pack is provided by the present disclosure. The battery pack includes the battery pack frame, a bottom plate, and at least one battery module. The bottom plate is connected to a bottom of each of the front frame, a first connecting frame, a rear frame, and a second connecting frame. The bottom plate cooperates with the battery pack frame to form an accommodation cavity. The battery module is arranged inside the accommodation cavity.

### BRIEF DESCRIPTION OF THE DRAWINGS

FIG. 1 is a schematic three-dimensional diagram of a battery pack frame according to some embodiments of the present disclosure.
FIG. 2 is a schematic structural diagram of a first connecting frame and a second connecting frame according to some embodiments of the present disclosure.
FIG. 3 is a schematic cross-sectional diagram of the first connecting frame and the second connecting frame according to some embodiments of the present disclosure.
FIG. 4 is a schematic three-dimensional diagram of a partition member according to some embodiments of the present disclosure.
FIG. 5 is a schematic enlarged diagram of a position A in FIG. 4.
FIG. 6 is a schematic enlarged diagram of a position B in FIG. 4.
FIG. 7 is a schematic assembly diagram of the battery pack frame according to some embodiments of the present disclosure.
FIG. 8 is a schematic enlarged diagram of a position C in FIG. 7.

### Reference numerals:

11, front frame; 12, first connecting frame; 13, rear frame; 14, second connecting frame;
21, top wall; 22, bottom wall; 23, inner side wall; 24, outer side wall; 25, reinforcing part;
30, partition member; 31, connecting member; 32, first partition part; 33, second partition part; 34, third partition part;
40, fixing member; 41, first through hole; 42, second through hole;
50, support member; 60, buffer member; 70, hanging beam; 80, accommodation cavity; 81, accommodation sub-cavity.

### DETAILED DESCRIPTION

The technical solutions of the present disclosure will be clearly and completely described below with reference to the accompanying drawings. Obviously, the described embodiments are part of the embodiments of the present disclosure, rather than all the embodiments. All other embodiments obtained by persons of ordinary skill in the art based on the embodiments of the present disclosure without creative efforts shall fall within the protection scope of the present disclosure.

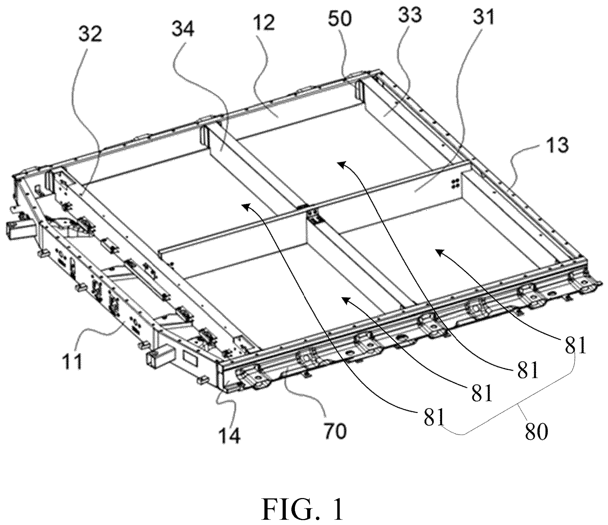

Referring to FIG. 1, a battery pack frame is provided by the embodiments of the present disclosure. The battery pack frame includes a front frame 11, a first connecting frame 12, a rear frame 13, and a second connecting frame 14 connected in sequence from end to tail. The first connecting frame 12 and the second connecting frame 14 are configured to fixedly connected to an external assembly. Each of the front frame 11 and the rear frame 13 is an integrated stamping molding structure. Each of the first connecting frame 12 and the second connecting frame 14 is an integrated roll molding structure.

By applying the technical solutions of the present disclosure, each of the front frame 11 and the rear frame 12 is provided as the integrated stamping molding structure, and each of the first connecting frame 12 and the second connecting frame 14 is provided as the integrated roll molding structure. Since structures after being stamped have advantages such as light weight and a low processing cost, an overall weight of the battery pack frame may be reduced, thereby reducing production cost and facilitating transportation of the battery pack frame. Since structures after being rolled have advantages such as high strength, and the first connecting frame 12 and the second connecting frame 14 need to be fixedly connected to the external assembly, the connection stability between the battery pack frame and the external assembly may be ensured. This reduces a risk of falling off of the battery pack frame and the external assembly, thereby ensuring safety during use of the battery pack frame.

Stamping is a molding processing method which uses presses and molds to apply external forces to plates, strips, pipes, and profiles to produce plastic deformation or separation, so as to obtain required shapes and sizes. Stamped members generally have characteristics of thin, uniform, light, and strong. Rolling is a process relied on a plastic movement and rolling of materials to process various complex parts. The deformation of rolling is linear contact carried out continuously and step by step, which requires a small deformation force. The strength of rolled members is high and the quality is stable.

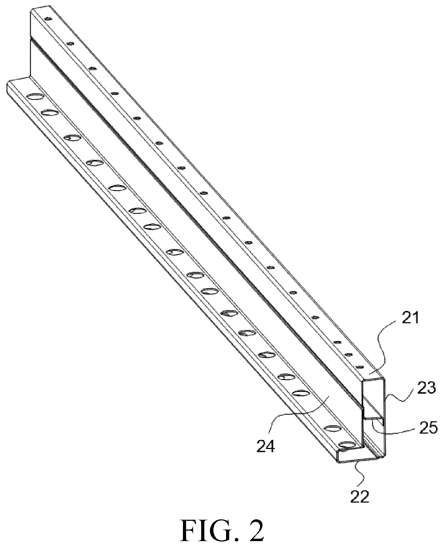

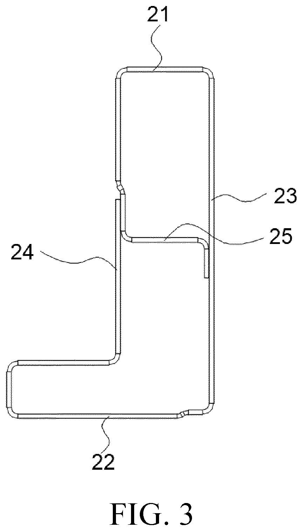

Referring to FIG. 2 and FIG. 3, in the present disclosure, a shape of the first connecting frame 12 is the same as a shape of the second connecting frame 14. Certainly, in other embodiments of the present disclosure, structures of the first connection frame 12 and the second connecting frame 14 may be different. Specific setting situations should be selected according to an environment in which the device is used, so that the applicability and scope of the device may be improved.

In the present disclosure, surfaces of the front frame 11, the first connecting frame 12, the rear frame 13, and the second connecting frame 14 are treated by an electrophoretic process. After being treated by the electrophoretic process, the front frame 11, the first connecting frame 12, the rear frame 13, and the second connecting frame 14 are connected to a partition member 30 to form a case body. Electrophoresis is a phenomenon in which charged particles move at different speeds in an electric field. Through this technology, the charged particles may be separated. During the electrophoresis process, the charged particles move towards an electrode opposite to electrical properties of the charged particles under an action of the electric field. In industrial production, the electrophoresis technology is mainly used for coating. Electro-coating is a common coating process in which the charged particles are deposited on a surface of a conductive material under the action of the electric field. Electro-coating is especially suitable for coating workpieces with complex shapes, due to advantages of uniform coating film thickness, strong adhesion, and good coating quality. This can avoid corrosion of a steel frame, which ensures the appearance integrity of the frame, and further prolongs a service life of the frame.

Specifically, the frames in the present disclosure uses high-strength steel, such as 780DP or higher-strength steel, so that a structural strength of the frame is ensured as much as possible. Further, the front frame 11, the first connecting frame 12, the rear frame 13, and the second connecting frame 14 are connected by resistance spot welding, laser welding, or sealant.

In some embodiments, each of the first connecting frame 12 and the second connecting frame 14 includes a top wall 21, an outer side wall 24, a bottom wall 22, and an inner side wall 23 sequentially formed to be connected to each other by rolling. The top wall 21, the bottom wall 22, the inner side wall 23, and the outer side wall 24 cooperate together to form a cavity. Since the cavity is not easily deformed due to its simple structure, high strength, and good rigidity, a structural strength of each of the first connecting frame 12 and the second connecting frame 14 may be improved, thereby ensuring the structural stability of each of the first connecting frame 12 and the second connecting frame 14.

In some embodiments, a part of the outer side wall 24 adjacent to the bottom wall 22 protrudes toward a side away from the inner side wall 23 to form a boss structure.

In some embodiments, a thickness of each of the top wall 21, the bottom wall 22, the inner side wall 23, and the outer side wall 24 is defined as H, and the H ranges from 1 mm to 2 mm. Under a condition that the H is less than 1 mm, the thickness of each of the top wall 21, the bottom wall 22, the inner side wall 23, and the outer side wall 24 is too thin, so that a structural strength of an assembly is low and cannot meet use requirements of the device. Under a condition that the H is greater than 2 mm, the thickness of each of the top wall 21, the bottom wall 22, the inner side wall 23, and the outer side wall 24 is too thick. This not only increases materials required for production, resulting in an increase in production cost, but also increases an overall weight of the assembly, which is not conducive to assembly and transportation. Therefore, the H ranges from 1 mm to 2 mm, so that the structural strength of the assembly is ensured to meet the use requirements, and disadvantages such as high production cost and overall weight are avoided.

In the present disclosure, the H may be set to other numerical values such as 1 mm, 1.5 mm, or 2 mm, as long as the H can meet the use requirements of the device.

In some embodiments, the battery pack frame further includes a reinforcing part 25 between the inner side wall 23 and the outer side wall 24. One end of the reinforcing part 25 is connected to a side of the inner side wall 23 adjacent to the outer side wall 24, and the other end of the reinforcing part 25 is connected to a side of the outer side wall 24 adjacent to the inner side wall 23. An extending direction of the reinforcing part 25 is the same as an extending direction of the top wall 21. In this way, not only a space between the inner side wall 23 and the outer side wall 24 is reasonably utilized, but also the inner side wall 23 and the outer side wall 24 may be supported by the reinforcing part 25 during operation of the device, and a structural strength between the inner side wall 23 and the outer side wall 24 may be improved to ensure the stability of the device during operation.

In some embodiments of the present disclosure, a width of the reinforcing part 25 is the same as a width of the top wall 21. Certainly, in other embodiments of the present disclosure, the width of the reinforcing part 25 may be adjusted according to strength requirements. Moreover, a cross-sectional shape of each of the first connecting frame 12 and the second connecting frame 14 is L-shaped. In other embodiments, the cross-sectional shape of each of the first connecting frame 12 and the second connecting frame 14 may also be set to other shapes such as a " 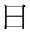 "-shape, a " 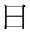 "-shape, or a "T"-shape, as long as the use requirements of the device may be met.

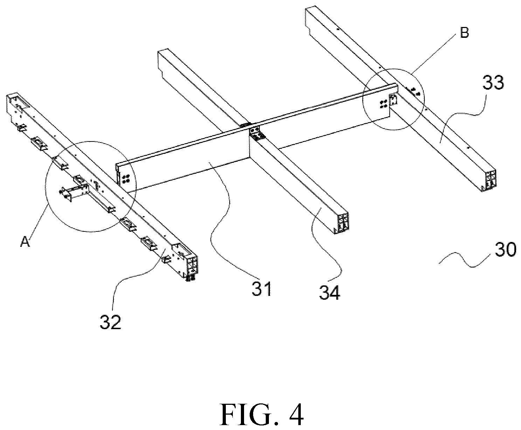

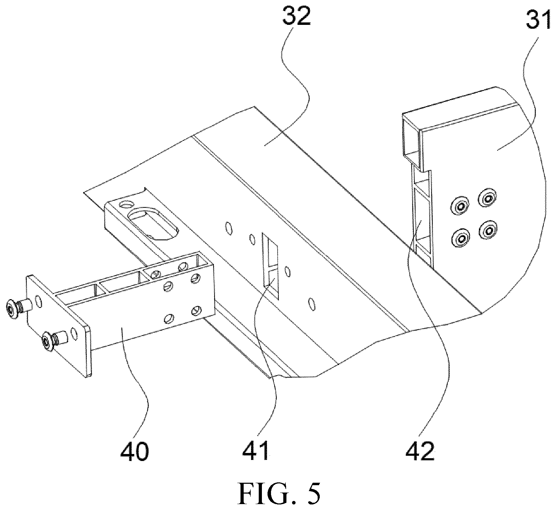

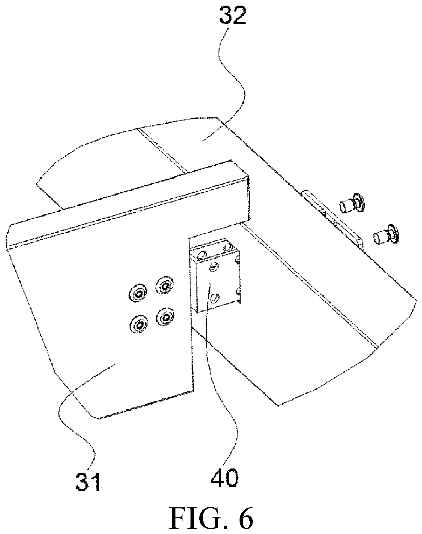

Referring to FIG. 4 to FIG. 6, the battery pack frame further includes the partition member 30. The front frame 11, the first connecting frame 12, the rear frame 13, and the second connecting frame 14 jointly enclose to form an accommodation cavity 80. The partition member 30 is disposed inside the accommodation cavity 80. The accommodation cavity 80 is divided into a plurality of accommodation sub-cavities 81 configured to accommodate battery modules by the partition member 30, so as to prevent the battery modules inside the plurality of accommodation sub-cavities 81 from disturbing other battery modules when the battery modules expand, thereby ensuring the stability of the device during operation.

In some embodiments, a material of the separator 30 includes aluminum.

In some embodiments, the partition member 30 includes a connecting member 31, a first partition part 32, a second partition part 33, and a third partition part 34. The connecting member 31 extends along a length direction of the first connecting frame 12. The first partition part 32 is disposed at an end of the connecting member 31 adjacent to the front frame 11 and extends along a length direction of the rear frame 13. The second partition part 33 is disposed at the other end of the connecting member 31 and extends along the length direction of the rear frame 13. The third partition part 34 is disposed at a middle part of the connecting member 13 and extends along the length direction of the rear frame 13. Both ends of each of the first partition part 32, the second partition part 33, and the third partition part 34 are fixedly connected to the first connecting frame 12 and the second connecting frame 14, respectively.

In some embodiments of the present disclosure, the partition member 30 is a structure with a " 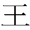 ''-shape. The third partition part 34 has a split structure symmetrically arranged on both sides of the connecting member 31 along the length direction of the rear frame 13. This arrangement not only facilitates disassembly and assembly of the component, but also meets installation requirements of the battery modules. Certainly, in other embodiments, the partition member 30 may have other shapes such as a " 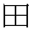 ''-shape, as long as the use requirements of the devices may be met.

In some embodiments, the partition member 30 further includes a fixing member 40. The first partition part 32 and the second partition part 33 are fixedly connected to the connecting member 31 through the fixing member 40. In the present disclosure, the fixing member 40 is a T-shaped connecting terminal. The T-shaped connecting terminal is overlapped on side walls of the first partition part 32 and the second partition part 33 after the first partition part 32 and the second partition part 33 are fixed to the connecting member 31, so that a contact area between the first partition part 32 and the second partition part 33 may be increased, thereby improving a connection strength after being fixed.

Certainly, in other embodiments of the present disclosure, the fixing member 40 may further be provided as a fastening bolt or the like, as long as fixing requirements of the device may be met

In some embodiments, a side of the first partition part 32 and/or the second partition part 33 facing the front frame 11 includes a first through hole 41 extending along the length direction of the first connecting frame 12. The connecting member 31 includes a second through hole 42 aligned with the first through hole 41. The fixing member 40 is inserted into the first through hole 41 and the second through hole 42, so that the first partition part 32 and/or the second partition part 33 is fixedly connected to the connecting member 31.

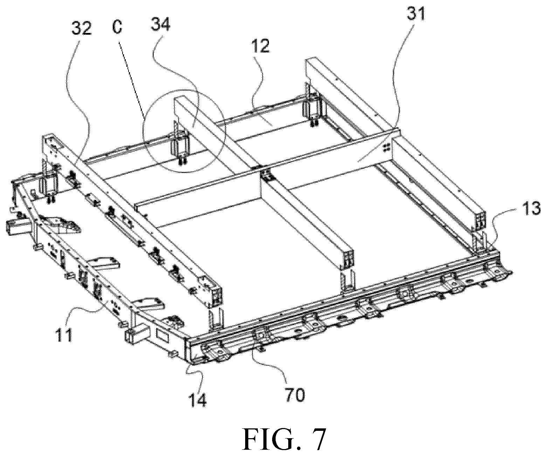

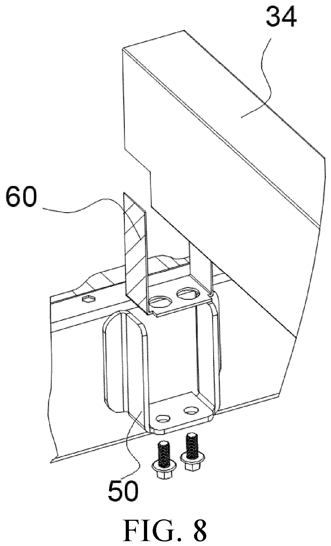

Referring to FIG. 7 and FIG. 8, the battery pack frame further includes support members 50. Each of the first partition part 32, the second partition part 33, and the third partition part 34 is fixed connected to the first connecting frame 12 and the second connecting frame 14 through the support members. In this way, the stability when the first partition portion 32, the second partition portion 33, and the third partition portion 34 are connected to the first connection frame 12 and the second connection frame 14 may be ensured, thereby improving a connecting strength between components as much as possible.

In the present disclosure, a cross-sectional shape of each of the support members 50 along a width direction of the rear frame 13 is U-shaped. An opening of each of the support members 50 is provided facing a top of the first connecting frame 12. Each of the support members 50 is provided with at least one mounting hole. A position of each of the first partition part 32, the second partition part 33, and the third partition part 34 corresponding to the mounting hole of a corresponding one of the support members 50 is provided with at least one through hole, so that the mounting hole and the through hole may be fixed and connected through the external fixing member 40. In the present disclosure, the external fixing member 40 is a bolt. The above-described structure is simple and prone to process, which can not only reduce the production cost of the device, but also further facilitate disassembly and disassembly efficiency of the device.

In some embodiments, the battery pack frame further includes buffer members 60 each arranged between any one of the first partition part 32, the second partition part 33, and the third partition part 34 and a corresponding one of the support members 50. Each of the buffer members 60 is configured to fill a gap between any one of the first partition part 32, the second partition part 33, and the third partition part 34 and the corresponding one of the support members 50.

In the present disclosure, the buffer members 60 are made of a structural adhesive. The structural adhesive has good peeling resistance and impact resistance due to its very high strength. A compressive strength of the structural adhesive may reach 65 MPa. A steel-steel positive tensile bonding strength of the structural adhesive may reach 30 MPa. A shear strength of the structural adhesive may reach 18 MPa. The above properties enable the structural adhesive to withstand larger loads, and the performance remains stable within the expected life.

In some embodiments, since the structural adhesive has good fatigue resistance and corrosion resistance, the structural adhesive can be used as an isolation layer to reduce or even eliminate electrochemical corrosion problems between different metals. Moreover, a preparation process of the structural adhesive is simple, thereby improving an installation efficiency of the assembly.

In some embodiments, a side of the first connecting frame 12 and/or the second connecting frame 14 away from the accommodation cavity 80 is further provided with a hanging beam 70. The mounting beam 70 is connected to the outer side wall 24 of the first connecting frame 12 and/or the second connecting frame 14. An extension direction of the hanging beam 70 is parallel to the length direction of the first connecting frame 12. The external assembly is mounted on a side surface of the hanging beam 12 adjacent to the top wall 21.

A battery pack is further provided by the embodiments of the present disclosure. The battery pack further includes the battery pack frame mentioned above, a bottom plate, and at least one battery module. The bottom plate is connected to a bottom of each of the front frame 11, the first connecting frame 12, the rear frame 13, and the second connecting frame 14. The bottom plate cooperates with the battery pack frame to form an accommodation cavity. The battery module is arranged in the accommodating cavity.

In the battery pack frame provided by the present disclosure, by applying the technical solutions of the present disclosure, each of the front frame 11 and the rear frame 12 is provided as the integrated stamping molding structure, and each of the first connecting frame 12 and the second connecting frame 14 is provided as the integrated roll molding structure. Since structures after being stamped have advantages such as light weight and the low processing cost, an overall weight of the battery pack frame may be reduced, thereby reducing production cost and facilitating transportation of the battery pack frame. Since structures after being rolled have advantages such as high strength, and the first connecting frame 12 and the second connecting frame 14 need to be fixedly connected to the external assembly, the connection stability between the battery pack frame and the external assembly may be ensured. This reduces a risk of falling off of the battery pack frame and the external assembly, thereby ensuring safety during use of the battery pack frame.

In the battery pack provided by the present disclosure, the battery module is arranged inside the accommodation cavity 80 of the battery pack frame, thereby ensuring the stability of the battery module during operation.

## Claims

1. A battery pack frame, **characterized in that** the battery pack frame comprises a front frame (11), a first connecting frame (12), a rear frame (13), and a second connecting frame (14) connected in sequence from end to tail;
wherein each of the front frame (11) and the rear frame (13) is an integrated stamping molding structure, and each of the first connecting frame (12) and the second connecting frame (14) is an integrated roll molding structure.

2. The battery pack frame according to claim 1, **characterized in that** any one or a combination of two of the first connecting frame (12) and the second connecting frame (14) comprises a top wall (21), a bottom wall (22), an inner side wall (23), and an outer side wall (24) connected together, the outer side wall (24) is connected to an external assembly, and the top wall (21), the bottom wall (22), the inner side wall (23), and the outer side wall (24) cooperate together to define a cavity.

3. The battery pack frame according to claim 2, **characterized in that** a part of the outer side wall (24) adjacent to the bottom wall (22) protrudes toward a side away from the inner side wall (23) to form a boss structure.

4. The battery pack frame according to claim 2 or claim 3, **characterized in that** a thickness of each of the top wall (21), the bottom wall (22), the inner side wall (23), and the outer side wall (24) ranges from 1 mm to 2 mm.

5. The battery pack frame according to any one of claims 2-4, **characterized in that** the battery pack frame further comprises a reinforcing part (25) between the inner side wall (23) and the outer side wall (24), one end of the reinforcing part (25) is connected to a side of the inner side wall (23) adjacent to the outer side wall (24), the other end of the reinforcing part (25) is connected to a side of the outer side wall (24) adjacent to the inner side wall (23), and an extending direction of the reinforcing part (25) is the same as an extending direction of the top wall (21).

6. The battery pack frame according to any one of claims 1-5, **characterized in that** the battery pack frame further comprises a partition member (30), the front frame (11), the first connecting frame (12), the rear frame (13), and the second connecting frame (14) jointly enclose to form an accommodation cavity (80), the partition member (30) is disposed inside the accommodation cavity (80), and the accommodation cavity (80) is divided into a plurality of accommodation sub-cavities (81) configured to accommodate battery modules by the partition member (30).

7. The battery pack frame according to claim 6, **characterized in that** the partition member (30) comprises:
a connecting member (31) extending along a length direction of the first connecting frame (12);
a first partition part (32) disposed at an end of the connecting member (31) adjacent to the front frame (11) and extending along a length direction of the rear frame (13);
a second partition part (33) disposed at an end of the connecting member (31) adjacent to the rear frame (13) and extending along the length direction of the rear frame (13); and
a third partition part (34) disposed at a middle part of the connecting member (31) and extending along the length direction of the rear frame (13);
wherein both ends of each of the first partition part (32), the second partition part (33), and the third partition part (34) are fixedly connected to the first connecting frame (12) and the second connecting frame (14), respectively.

8. The battery pack frame according to claim 7, **characterized in that** the partition member (30) further comprises:
a fixing member (40), wherein any one or a combination of two of the first partition part (32) and the second partition part (33) is fixedly connected to the connecting member (31) through the fixing member (40).

9. The battery pack frame according to claim 8, **characterized in that** a side of any one or a combination of two of the first partition part (32) and the second partition part (33) facing the front frame (11) comprises a first through hole (41) extending along the length direction of the first connecting frame (12), the connecting member (31) comprises a second through hole aligned with the first through hole (41), and the fixing member (40) is inserted into the first through hole (41) and the second through hole (42), so that the any one or the combination of two of the first partition part (32) and the second partition part (33) is fixedly connected to the connecting member (31).

10. The battery pack frame according to any one of claims 7-9, **characterized in that** the third partition part (34) has a split structure symmetrically arranged on both sides of the connecting member (31) along the length direction of the rear frame (13).

11. The battery pack frame according to any one of claims 7-10, **characterized in that** the battery pack frame further comprises support members (50), each of the first partition part (32), the second partition part (33), and the third partition part (34) is fixed connected to the first connecting frame (12) and the second connecting frame (14) through the support members (50).

12. The battery pack frame according to claim 11, **characterized in that** a cross-sectional shape of each of the support members (50) along a width direction of the rear frame (13) is U-shaped, and an opening of each of the support members (50) is provided facing a top of the first connecting frame (12).

13. The battery pack frame according to claim 11 or claim 12, **characterized in that** the battery pack frame further comprises buffer members (60) each arranged between any one of the first partition part (32), the second partition part (33), and the third partition part (34) and a corresponding one of the support members (50), and each of the buffer members (60) is configured to fill a gap between any one of the first partition part (32), the second partition part (33), and the third partition part (34) and the corresponding one of the support members (50).

14. The battery pack frame according to any one of claims 6-13, **characterized in that** a material of the partition member comprises aluminum, and a material of the battery pack frame comprises 780DP steel.

15. The battery pack frame according to any one of claims 1-14, **characterized in that** surfaces of the front frame, the first connecting frame, the rear frame, and the second connecting frame are treated by an electrophoretic process.

16. The battery pack frame according to any one of claims 5-15, **characterized in that** a width of the reinforcing part (25) is the same as a width of the top wall (21).

17. A battery pack, **characterized in that** the battery pack comprises:
the battery pack frame according to any one of claims 1-16;
a bottom plate connected to a bottom of each of the front frame (11), a first connecting frame (12), a rear frame (13), and a second connecting frame (14), wherein the bottom plate cooperates with the battery pack frame to form an accommodation cavity (80); and
at least one battery module arranged inside the accommodation cavity (80).
